(19) **Europäisches Patentamt**

**European Patent Office**

**Office européen des brevets**

(11) Veröffentlichungsnummer: **0 022 477**
**B1**

(12) **EUROPÄISCHE PATENTSCHRIFT**

(45) Veröffentlichungstag der Patentschrift:
**07.10.87**

(51) Int. Cl.⁴: **C 01 B 25/46**

(21) Anmeldenummer: **80103272.3**

(22) Anmeldetag: **12.06.80**

(54) **Verfahren zur Reinigung von Nassverfahrensphosphorsäure.**

(30) Priorität: **04.07.79 DE 2926943**

(43) Veröffentlichungstag der Anmeldung:
**21.01.81 Patentblatt 81/3**

(45) Bekanntmachung des Hinweises auf die Patenterteilung:
**07.10.87 Patentblatt 87/41**

(84) Benannte Vertragsstaaten:
**AT BE CH FR GB IT LI NL SE**

(56) Entgegenhaltungen:
**FR - A - 1 292 338**
**FR - A - 2 374 262**
**GB - A - 1 042 621**

(73) Patentinhaber: **HOECHST AKTIENGESELLSCHAFT,
Postfach 80 03 20, D-6230 Frankfurt am Main 80 (DE)**

(72) Erfinder: **Gradl, Reinhard, Dr., Am Grünen Weg 6,
D-5030 Hürth (DE)**
Erfinder: **Schrödter, Klaus, Dr., Röntgenstrasse 23,
D-5000 Köln 30 (DE)**
Erfinder: **Ehlers, Klaus-Peter, Dr., Am Steinfeld 5,
D-5042 Erftstadt (DE)**
Erfinder: **Scheibitz, Wolfgang, Dr., Völklinger Weg 64,
D-6000 Farnkfurt 71 (DE)**

## Beschreibung

Es ist bekannt, zur extraktiven Reinigung von Nassverfahrensphosphorsäure als Lösungsmittel sowohl solche organischen Solventien zu verwenden, die mit Wasser unbegrenzt mischbar sind, als auch solche, die mit Wasser nicht mischbar sind.

1. Die vorliegende Erfindung betrifft ein Verfahren zur Reinigung einer wässrigen Nassverfahrensphosphorsäure mit einem organischen Lösungsmittel, das mit Wasser nicht oder nur begrenzt mischbar ist und Phosphorsäure zu lösen vermag, in mehreren Extraktionszonen, die jeweils Misch- und Trennzonen umfassen, wobei die organische Lösungsmittelphase in der wässrigen Phase dispergiert wird, die beiden Phasen im Gegenstrom zueinander geführt werden und die gereinigte Phosphorsäure aus dem erhaltenen organischen Extrakt zurückgewonnen wird, nachdem dieser von dem nicht vom Lösungsmittel aufgenommenen Teil der wässrigen Phase, dem Raffinat, abgetrennt worden ist.

Erstere haben den Nachteil, dass die Reinigung der Extrakte von mitgelösten Verunreinigungen sowie die Wiedergewinnung der freien Phosphorsäure aus dem Lösungsmittel schwierig und die Rückführung der freien Säure nur über aufwendige Trennmethoden möglich ist. Deshalb setzt man in diesen Fällen z.B. den erhaltenen Extrakten konzentrierte Basen zu und scheidet damit die Phosphorsäure in Form ihrer Alkali- oder Ammoniumsalze ab. Ein solches Verfahren ist beispielsweise in der DE-AS 1 952 104 beschrieben.

Die mit Wasser nicht mischbaren Lösungsmittel haben den Nachteil, dass aufgrund des niedrigen Verteilungskoeffizienten der Phosphorsäure zur Erzielung grosser Extraktausbeuten hohe Lösungsmittel-Säure-Verhältnisse sowie viele Extraktionsstufen errorderlich sind. Ausserdem entstehen bei dieser Art von Extraktion meist sehr verdünnte Reinsäuren, die für die meisten Verwendungszwecke unter grossem Energieeinsatz konzentriert werden müssen.

Als weitere Art von Extraktionsmitteln für Phosphorsäure sind noch die mit Wasser teilweise mischbaren organischen Lösungsmittel bekannt. So wird beispielsweise in der DE-AS 2 127 141 die Extraktion mit Lösungsmitteln beschrieben, die 40–50% weniger Wasser enthalten als ihrer Sättigung entspricht. In diesem Fall ist der Verteilungskoeffizient der Phosphorsäure vergleichsweise grösser als bei Verwendung der entsprechenden wassergesättigten Alkohole, doch ändert dies wenig an der zur Erzielung maximaler Ausbeuten notwendigen hohen Stufenzahl sowie an dem gleichzeitig erforderlichen hohen Lösungsmittel-Säure-Verhältnis von ca. 12:1 bis 28:1.

Diese Nachteile wiederum können nach der DE-13 23 21 751 vermieden werden, wenn man Lösungsmittel, in denen Wasser begrenzt löslich ist, und die die Phosphorsäure aufzunehmen vermögen, in wasserfreier Form einsetzt.

Bei diesem Verfahren werden die in der Nassphosphorsäure vorhandenen Verunreinigungen ausgesalzt, indem man das organische Lösungsmittel in mindestens solchen Mengen einsetzt, dass die gesamte in der Nassphosphorsäure enthaltene Phosphorsäure sowie das in nicht gebundener Form vorliegende Wasser in dem organischen Lösungsmittel gelöst werden. Dazu sind je nach Konzentration der eingesetzten Rohsäure nur noch Lösungsmittel-Säure-Verhältnisse von 9,2:1 bis 2,5:1 und ein höchstens zweistufiger Gegenstrom erforderlich.

Nachteilig bei dieser Verfahrensweise ist wiederum, dass der die Verunreinigungen enthaltende Extraktions-Rückstand je nach verwendeter Rohsäure in einer zähflüssigen bis festen Form anfällt, was seine Handhabung erschwert und zu Einschlüssen von Lösungsmittel führt.

Diese Nachteile werden vermieden, wenn gemäss DE-A 26 57 189 zur Extraktion von Nassverfahrensphosphorsäure das Lösungsmittel mit einem Wassergehalt von mehr als 0% und weniger als 50% der Sättigungskonzentration und unter Zusatz einer solchen Menge an Mineralsäure eingesetzt wird, wie es dem in der Rohsäure an Kationen gebundenen Anteil an Phosphat in Molen entspricht.

Alle genannten Verfahren haben jedoch einen gemeinsamen Nachteil, der vor allem in der betrieblichen Praxis zu erheblichen Störungen führt:

Je nach dem $P_2O_5$-Gehalt der eingesetzten Rohsäure, den in ihr nach Art und Menge enthaltenen Verunreinigungen, insbesondere an Calcium-, Magnesium-, Aluminium- und Eisenverbindungen sowie in Abhängigkeit des Wassergehaltes des Lösungsmittels kommt es, wenn man hohe Ausbeuten an $P_2O_5$ anstrebt, bei der mehrstufigen Extraktion von Phosphorsäure zu mehr oder weniger starken Ausscheidungen von Feststoffen in den beiden Phasen, vor allem aber auf den von diesen berührten Oberflächen der Apparate. Diese Ablagerungen, die überwiegend aus Calciumsulfat in wasserfreier oder wasserhaltiger Form oder/und Natriumhexafluorosilikat bestehen, führen zu Verstopfungen, insbesondere in Rohrleitungen, an Über- und Einläufen sowie zu Verkrustungen an Misch- und Förderorganen. Dadurch kommt es zu

a) verringerter Mischwirkung, wodurch die $P_2O_5$-Ausbeute erheblich verringert wird,

b) zu Verschmutzung und damit zu Störungen an messtechnischen Einrichtungen, wodurch die Sicherheit beeinträchtigt wird,

c) zu Zwangsstillständen durch Ausfall von Förderorganen und Ventilen.

Die Folge sind häufige Produktionsunterbrechungen, die neben den Reinigungskosten zu erheblichen wirtschaftlichen Verlusten führen können.

Aufgabe der vorliegenden Erfindung ist es deshalb, die Reinigung von Nassverfahrensphosphorsäure unter solchen Bedingungen durchzuführen, dass

a) ein Höchstmass an $P_2O_5$ gewonnen wird,

b) möglichst wenig Verunreinigungen in die organische Phase gelangen,

c) während des Extraktionsprozesses keine Verkrustungen durch auskristallisierende Verbindungen auftreten, und

d) Raffinate entstehen, die leicht handhabbar sind.

Überraschenderweise wurde gefunden, dass sich diese Aufgabe lösen lässt, wenn man die eingangs erwähnte Extraktion von Nassverfahrensphosphorsäure mit einem organischen Lösungsmittel, das mit Wasser nicht oder nur begrenzt mischbar ist, so durchführt, dass man zu Beginn der Extraktion die Mischzonen einer Extraktionskolonne mit wässriger Phase füllt, die beiden Phasen den Extraktionszonen in einem Volumenverhältnis von organischer : wässriger Phase von mindestens 2,5:1 kontinuierlich zuführt, in den Mischzonen ein Volumenverhältnis von organischer : wässriger Phase von 1:1,5 bis 1:4 einstellt und dieses Verhältnis dadurch aufrechterhält, dass man die Phasentrennschicht im unteren Drittel der oberen Trennzone einstellt. Dabei ist es vorteilhaft, wenn man dem organischen Lösungsmittel eine Mineralsäure, insbesondere Schwefelsäure, in einer Menge zusetzt, die dem in der Phosphorsäurelösung an Kationen gebundenem Anteil der Phosphorsäure äquivalent ist.

Vorzugsweise werden erfindungsgemäss als organisches Lösungsmittel Alkohole mit 5 Kohlenstoffatomen – wasserfrei, teilweise oder völlig wassergesättigt – und Nassverfahrensphosphorsäurelösungen mit $P_2O_5$-Gehalten von 40–55 Gew.% eingesetzt.

Der notwendige Lösungsmittelmengeneinsatz ist abhängig vom Wassergehalt des Lösungsmittels und der $P_2O_5$-Konzentration der verunreinigten Nassverfahrensphosphorsäure. Die Lösungsmittel werden mit abnehmender $P_2O_5$-Konzentration der Säure und zunehmendem Wassergehalt des Lösungsmittels in grösseren Mengen zugesetzt. So werden beispielsweise bei Verwendung von wasserfreien $C_5$-Alkoholen als Lösungsmittel und bei $P_2O_5$-Gehalten der Säuren von jeweils 40 bis 55 Gewichts% die Alkohole entsprechend in Volumenteilen von 5,5 bis 2,5 pro 1 Volumenanteil Säure bei Verwendung von wassergesättigten Alkoholen und 40 bis 55%iger Säure 6,0 bis 8,2 Volumenteile Alkohol eingesetzt. Die Extraktion kann bei Temperaturen zwischen 0 und 98 °C, vorzugsweise zwischen 20 und 50 °C, durchgeführt werden. Für die Extraktion empfiehlt es sich, eine Gegenstromanlage aus 4 bis 10 Stufen, vorzugsweise von 5–8 Stufen, zu verwenden.

Grundlage des vorliegenden Extraktionsverfahrens ist, dass wässrige Phase als kontinuerliche Phase dient, in welcher das organische Lösungsmittel dispergiert wird, so dass der Stoffaustausch, entgegen der bei flüssig-flüssig-Extraktionen allgemein gültigen Regel, von der kontinuierlichen Phase in die disperse Phase erfolgt (vergl. P. J. Bailes, C. Hanson, M. A. Hughes in «Chemical Engineering», Jan. 1976, Seiten 86–100).

Obwohl der dem System während der Extraktion zugeführte Anteil an Lösungsmittel insgesamt gesehen volumenmässig grösser ist als der der Phosphorsäure, wird dies erfindungsgemäss dadurch erreicht, dass im Mischbereich der Extraktionszone stationär ein Überschuss an wässriger Phase eingestellt und aufrecht erhalten wird.

Die Durchmischung der beiden Phasen kann nach allen bekannten Methoden, die zur Dispergierung zweier flüssigen Phasen führen, erfolgen, wobei lediglich darauf zu achten ist, dass die wässrige Phase als kontinuierliche Phase erhalten bleibt und nach dem Stoffaustausch der Mischung in bekannter Weise Gelegenheit zur Trennung der Phasen gegeben wird.

Völlig unvorhersehbar war für einen Fachmann, dass sich aus der neuen Arbeitsweise folgende Vorteile ergeben:

a) Höhere $P_2O_5$-Ausbeute als bei Dispergierung in üblicher Weise, d. h. umgekehrt Dispergierung der wässrigen Phase in der organischen als kontinuierliche Phase.

Werden unter sonst völlig gleichen Versuchsbedingungen (Stufenzahl, Mengenverhältnisse) zwei Versuche zur Extraktion von Nassphosphorsäure durchgeführt mit dem Unterschied, dass einmal die wässrige Phase kontinuierlich eingesetzt und organische Phase dispergiert wird und im anderen Fall umgekehrt verfahren wird, so ergeben sich in Abhängigkeit der gewählten Versuchsbedingungen ($P_2O_5$-Konzentration der Rohsäure, Menge, Art und Wassergehalt des Lösungsmittels) im ersten Fall um 1,0 bis 2,5% höhere Ausbeuten an extrahiertem $P_2O_5$.

b) Störungsfreier Betriebsablauf

Durch das erfindungsgemässe Verfahren werden Verkrustungen durch auskristallisierende Verbindungen vermieden. Eventuell anfallende Feststoffe bilden keine Ablagerungen an Behälterwänden und Einbauten, sondern bleiben in der wässrigen Phase suspendiert und können so bequem mit den Raffinaten ausgeschleust werden.

Dadurch werden Reinigungsoperationen überflüssig oder auf ein Mindestmass eingeschränkt und der Produktionsprozess braucht nicht unterbrochen zu werden. Die Ausbeute an extrahiertem $P_2O_5$ bleibt konstant hoch. Messtechnische Einrichtungen bleiben funktionstüchtig, wodurch ein sicherer Betriebsablauf gewährleistet wird.

Die wässrige Phase mit den zu entfernenden Verunreinigungen kann, beispielsweise durch Pumpen, gut gefördert werden und durch Destillation von eventuell eingeschlossenem Lösungsmittel befreit werden.

c) Besseres Koaleszenzverhalten der Mischung

Ein weiterer Vorteil des erfindungsgemässen Verfahrens ist die Tatsache, dass nach der erfolgten Mischung bei der Koaleszenz eine äusserst scharfe Trenngrenze zwischen den beiden Flüssigkeiten entsteht.

Dadurch kann die Lage der Phasengrenzfläche ohne Schwierigkeiten mit einfachen mechanischen, optischen oder akustischen Messmethoden ermittelt und geregelt werden.

## d) Niedriges Entrainment

Durch das erfindungsgemässe Verfahren wird das Entrainment, das Mitreissen einer Phase in die andere, insbesondere von Tröpfchen schwerer Phase in die leichtere Phase, praktisch völlig vermieden. Dadurch ergeben sich im Vergleich zur herkömmlichen Dispergierart bei ein- und denselben Durchsätzen höhere Stufenwirkungsgrade oder bei gleicher Stufenzahl höhere Durchsätze.

Die Vermeidung von Entrainmentbildung hat ausserdem zur Folge, dass der entstehende Extrakt weniger stark verunreinigt ist und direkt weiterverarbeitet werden kann.

## e) Verbesserte Abtrennung der organischen Verunreinigungen

Ein weiterer Vorteil des erfindungsgemässen Verfahrens besteht darin, dass die mit der Rohsäure eingebrachten organischen Verunreinigungen bevorzugt in der wässrigen Phase verbleiben und mit dieser auf kurzem Weg ausgeschleust werden. Bei umgekehrter Dispergierung werden diese organischen Verunreinigungen bevorzugt von der organischen Phase aufgenommen, wodurch es zu Ausflockungen kommt, die ihrerseits zu erhöhtem Entrainment und damit schlechtem Wirkungsgrad führen können und ausserdem den Reinheitsgrad der zurückgewonnenen Reinsäure verschlechtern.

An Hand des nachfolgenden Beispiels soll das Verfahren näher erläutert werden, ohne dass dadurch der Erfindungsgegenstand auf dieses Beispiel beschränkt sein soll.

## Beispiel

1,5 l/h einer Rohphosphorsäure aus Khouribgaphosphat mit einem $P_2O_5$-Gehalt von 46,2% wurden im Gegenstrom mit dem 7,2-fachen Volumen eines Gemisches aus 75% n-Amylalkohol und 25% iso-Amylalkohol aus der Oxosynthese, dem 76,5 ml Schwefelsäure beigegeben wurden, behandelt. Der Alkohol hatte einen Wassergehalt von 5,5%. Dazu wurde eine Extraktionskolonne handelsüblicher Art (System Kühni) mit einem Innendurchmesser von 60 mm und 30 praktischen Stufen (= ca 6 theoretische Stufen) verwendet. Der aktive Teil der Kolonne, d.h. die Mischzone, wurde mit Rohsäure gefüllt und die organische Phase darin dispergiert und die Phasentrennschicht im unteren Drittel der oberen Trennzone gehalten. Die Drehzahl der Rührerwelle betrug bei einem Rührerdurchmesser von 40 mm 300 min$^{-1}$. Das Volumenverhältnis von organischer Phase zu wässriger Phase in der Mischzone betrug 30:70. Es hinterblieben 1,17 kg/h Raffinat mit 124,5 g $P_2O_5$, so dass der Endverlust an $P_2O_5$, bezogen auf das mit der Rohsäure eingesetzte $P_2O_5$, 2,4% betrug.

Nach 8-tägiger Versuchsdauer waren die Kolonne und messtechnische Einrichtungen im wesentlichen frei von Verkrustungen. Der Betrieb verlief störungsfrei.

## Vergleichsbeispiel

Es wurde der gleiche Versuch wie im Beispiel oben beschrieben mit denselben Mengenverhältnissen und Einsatzstoffen durchgeführt, jedoch mit dem Unterschied, dass der aktive Teil der Kolonne mit Lösungsmittel gefüllt wurde und die Phasengrenze in der unteren Trennzone gehalten wurde, so dass die wässrige in der organischen Phase dispergiert wurde und das Lösungsmittel die kontinuierliche Phase bildete. Das Volumenverhältnis von organischer zu wässriger Phase in der Mischzone betrug 90:10. Der Verlust an $P_2O_5$ betrug 3,8%, bezogen auf eingesetztes Roh-$P_2O_5$. Während des Versuches traten erhebliche Probleme durch Verkrustungen am Rührer und Einbauten auf. Das Bodenablassventil für den Austritt des Raffinates musste alle 2 Stunden gereinigt werden.

## Patentansprüche

1. Verfahren zur Reinigung einer wässrigen Nassverfahrensphosphorsäure mit einem organischen Lösungsmittel, das mit Wasser nicht oder nur begrenzt mischbar ist und Phosphorsäure zu lösen vermag, in mehreren Extraktionszonen, die jeweils Misch- und Trennzonen umfassen, wobei die organische Lösungsmittelphase in der wässrigen Phase dispergiert wird, die beiden Phasen im Gegenstrom zueinander geführt werden und die gereinigte Phosphorsäure aus dem erhaltenen organischen Extrakt zurückgewonnen wird, nachdem dieser von dem nicht vom Lösungsmittel aufgenommenen Teil der wässrigen Phase, dem Raffinat, abgetrennt worden ist, dadurch gekennzeichnet, dass man zu Beginn der Extraktion die Mischzonen einer Extraktionskolonne mit wässriger Phase füllt, die beiden Phasen den Extraktionszonen in einem Volumenverhältnis von organischer : wässriger Phase von mindestens 2,5:1 kontinuierlich zuführt, in den Mischzonen ein Volumenverhältnis von organischer : wässriger Phase von 1:1,5 bis 1:4 einstellt und dieses Verhältnis dadurch aufrechterhält, dass man die Phasentrennschicht im unteren Drittel der oberen Trennzone einstellt.

2. Verfahren nach Anspruch 1, dadurch gekennzeichnet, dass man dem organischen Lösungsmittel Schwefelsäure in einer Menge zusetzt, die mindestens dem in der Phosphorsäurelösung an Kationen gebundenem Anteil der Phosphorsäure äquivalent ist.

3. Verfahren nach Anspruch 1 oder 2, dadurch gekennzeichnet, dass man als organisches Lösungsmittel Alkohole mit 5 Kohlenstoffatomen einsetzt.

4. Verfahren nach einem der Ansprüche 1 bis 3, dadurch gekennzeichnet, dass man eine Nassverfahrensphosphorsäurelösung mit einem $P_2O_5$-Gehalt von 40 bis 55 Gew% einsetzt.

5. Verfahren nach einem der Ansprüche 1 bis 4, dadurch gekennzeichnet, dass man bei Verwendung von Nassverfahrensphosphorsäure mit $P_2O_5$-Gehalten von 40 bis 55 Gew% einerseits und $C_5$-Alkoholen als Lösungsmittel andererseits pro Volumenteil Säure 2,5 bis 5,5 Volumenteile wasserfreie C$_5$-Alkohole oder 6,0 bis 8,2 Volumenteile wassergesättigte C$_5$-Alkohole einsetzt.

## Claims

1. Process for purifying an aqueous solution of wet-process phosphoric acid with an organic solvent which is immiscible with water or only partially miscible with water, in a plurality of extraction zones, of which each comprises mixing zones and separating zones, wherein the organic solvent phase is dispersed in the aqueous phase, the two phases are contacted countercurrently with respect to one another and the purified phosphoric acid is recovered from the organic extract obtained, after separation of this latter from the portion of the aqueous phase (raffinate) not absorbed by the solvent, characterized in that, at the onset of the extraction, the mixing zones of an extraction zone are filled with the aqueous phase; the two phases are introduced continuously into the extraction zones in a ratio by volume of organic phase/aqueous phase of at least 2.5:1, a ratio by volume of organic phase/aqueous phase of 1:1.5 to 1–4 is established in the mixing zones, and this ratio is maintained by establishing the phase separation layer in the lower third portion of the upper separating zone.

2. Process as claimed in claim 1, wherein the organic solvent is used in admixture with a quantity of sulfuric acid at least equivalent to the phosphoric acid portion linked to cations in the phosphoric acid solution.

3. Process as claimed in claim 1 or 2, wherein the organic solvent is an alcohol with 5 carbon atoms.

4. Process as claimed in any of claims 1–3, wherein wet-process phosphoric acid containing 40 to 55 weight% P$_2$O$_5$ is used.

5. Process as claimed in any of claims 1–4, wherein in the event of wet-process phosphoric acid containing 40 to 55 weight% P$_2$O$_5$ being used together with a C$_5$-alcohol as the solvent, 2.5 to 5.5 parts by volume of an anhydrous C$_5$-alcohol or 6.0 to 8.2 parts by volume of a water-saturated C$_5$-alcohol are used per part by volume of acid.

## Revendications

1. Procédé pour purifier une solution aqueuse d'acide phosphorique préparé par voie humide à l'aide d'un solvant organique non miscible avec l'eau ou ne présentant qu'une miscibilité limitée avec l'eau et qui est capable de dissoudre l'acide phosphorique, dans plusieurs zones d'extraction comportant chacune des zones de mélange et de séparation, où la phase organique est dispersée dans la phase aqueuse, par passage des deux phases à contrecourant l'une par rapport à l'autre et recupération de l'acide phosphorique purifié de l'extrait organique obtenu, après séparation de ce dernier de la partie de la phase aqueuse non absorbée par le solvant ou «raffinat», caractérisé en ce que l'on remplit, au début de l'extraction, les zones de mélange d'une colonne d'extraction avec la phase aqueuse, on envoie en continu dans les zones d'extraction les deux phases dans un rapport en volume phase organique/phase aqueuse d'au moins 2,5:1, on établit dans les zones de mélange un rapport en volume phase organique/phase aqueuse de 1:1,5 à 1:4 et on maintient ce rapport en disposant la couche de séparation des phases dans le tiers inférieur de la zone de séparation supérieure.

2. Procédé selon la revendication 1, caractérisé en ce que l'on ajoute au solvant organique de l'acide sulfurique en quantité équivalant au moins à la fraction de l'acide phosphorique qui est fixée à des cations dans la solution d'acide phosphorique.

3. Procédé selon la revendication 1 ou 2, caractérisé en ce que l'on utilise comme solvants organiques des alcools en C$_5$.

4. Procédé selon l'une des revendications 1 à 3, caractérisé en ce que l'on utilise une solution d'acide phosphorique du procédé humide d'une teneur en P$_2$O$_5$ de 40 à 55% en poids.

5. Procédé selon l'une des revendications 1 à 4, caractérisée ce que, dans le cas où l'on utilise un acide phosphorique du procédé humide d'une teneur en P$_2$O$_5$ de 40 à 55% en poids d'une part et des alcools en C$_5$ comme solvants d'autre part, on utilise 2,5–5,5 parties en volume d'alcool en C$_5$ anhydre ou 6,0–8,2 parties en volume d'alcool en C$_5$ saturé d'eau par partie en volume d'acide.